# EUROPÄISCHE PATENTSCHRIFT

(11) **EP 3 765 316 B1**
(45) Veröffentlichungstag und Bekanntmachung des Hinweises auf die Patenterteilung: **20.04.2022**
(21) Anmeldenummer: 20708604.2
(22) Anmeldetag: 11.02.2020
(51) Int. Cl.: B60G 17/02, B60G 11/14, B60G 17/015, F16F 1/12, F16F 1/04

(54) **FAHRZEUGFEDERUNG MIT REGELBARER BODENFREIHEIT UND STEIFIGKEIT**
VEHICLE SUSPENSION HAVING CONTROLLABLE GROUND CLEARANCE AND RIGIDITY
SUSPENSION DE VÉHICULE PRÉSENTANT UNE GARDE AU SOL ET UNE RAIDEUR RÉGLABLES

(30) Priorität: 12.02.2019 RU 2019103888
(43) Veröffentlichungstag der Anmeldung: 20.01.2021
(73) Patentinhaber: Gavrilov, Aleksei V., Sankt Petersburg 197110 (RU)
(72) Erfinder: Gavrilov, Aleksei V., Sankt Petersburg 197110 (RU)
(74) Vertreter: Jeck, Anton
(86) Internationale Anmeldenummer: PCT/IB2020/000024
(87) Internationale Veröffentlichungsnummer: WO 2020/165644

(56) Entgegenhaltungen:
- DE-A1-102015 224 527
- JP-A- 2001 088 527
- US-A- 2 991 066

## Beschreibung

Die Erfindung betrifft eine Fahrzeugfederung mit einstellbarer (regelbarer, veränderbarer) Bodenfreiheit. Sie bezieht sich insbesondere auf regelbare Federungen mit Elektroantrieben mit Getriebe. Federungen dieses Typs werden hauptsächlich in Personenkraftfahrzeugen, Leichtlast-Kraftfahrzeugen sowie in elektrisch angetriebenen Fahrzeugen (Elektrofahrzeugen) eingesetzt.

Regelbare Federungen mit regelbarer (veränderbarer) Bodenfreiheit (Niveauregulierung) sind weit bekannt. Sie ermöglichen es, neue Federungseigenschaften zu erlangen, und zwar:
- die Bodenfreiheit der Karosserie zu vergrößern bzw. zu verringern,
- die Steifigkeit der Federung zu erhöhen bzw. zu verringern.

Bei den genannten Federungen werden zurzeit pneumatische oder hydraulische Systeme eingesetzt. Diese Systeme finden keine breite Anwendung, da sie kompliziert und kostspielig sind. Deswegen sind einfachere Lösungen gefragt. Der jüngste Trend besteht darin, hydraulische Systeme durch Elektroantriebe zu ersetzen. So werden Federaufhängungen mit einem Kraft-Schraubenpaar und einem Elektroantrieb mit Getriebe angeboten. Im Grunde genommen werden in solchen Federungen sowohl eine Feder als auch eine Schraubenwinde eingesetzt. Die Schraube einer Schraubenwinde wird über Wälzlager mit der Karosserie gekoppelt. Die Schraubenmutter dient als Auflager des oberen Federtellers der Federung. Beim Drehen der Schraube ändert sich die Höhenlage der Schraubenmutter und des Federtellers. Dadurch ändert sich die Bodenfreiheit unter der Fahrzeugkarosserie.

Als vorteilhaft wird bei ähnlichen regelbaren Federungen nicht nur ihre einfache Konstruktion angesehen. Solche Federungen zeichnen sich auch durch eine höhere Energieeffizienz im Vergleich zu pneumatischen und hydraulischen Systemen aus. Dies ist ein besonders attraktiver Vorteil für die Anwendung solcher Systeme in Elektroautos.

Bekannt ist eine Federung für Kraftfahrzeuge mit veränderbarer Bodenfreiheit (siehe Patent DE 102 55 764 B3, IPC B60G 17/00, B60G 17/015, veröffentlicht 26.02.2004). Diese Federung umfasst eine Feder und einen Elektromotor mit einem dünnwandigen Läufer. Innerhalb des Läufers ist ein oberer Anschlagfederteller angebracht. Der Teller stützt sich von unten auf eine Mutter. Die Mutter ist mit einer Klein-Gewindebuchse gekoppelt. Die Klein-Gewindebuchse dreht sich zusammen mit dem Läufer. Innerhalb der Gewindebuchse verläuft eine Dämpferstange.

In der bekannten Federung ändert sich die Steifigkeit der Feder mit der Änderung der Karosseriehöhe nicht. Dabei befindet sich die Kraftvorrichtung in einem Bereich, der die stärksten Schwingungen und Schlagbelastungen vom Rad aufnimmt. Die Lage des Schraubenpaars der Schraubenwinde unter der Feder erschwert dazu den Schutz der Schraubenpaararbeitsflächen vor Schmutz.

Bekannt ist eine Federung für Kraftfahrzeuge mit veränderbarer Bodenfreiheit (siehe Patentanmeldung JP 2001 301436 A, IPC B60G 11/16, B60G 15/06, B60G 17/02, veröffentlicht 31.10.2001). Diese Federung enthält eine Zylinderfeder. Die Zylinderfeder ist zwischen den Federtellern befestigt. Mit ihrem unteren Federteller stützt sich die Zylinderfeder auf eine Mutter. Unter der Feder ist eine Kraftvorrichtung in Form eines Schraubenpaares der Schraubenwinde angebracht. Die Schraubenwinde wird mithilfe eines Antriebs in Drehung versetzt, z. B. eines Elektromotors mit Getriebe.

Der Nachteil der bekannten Federung besteht in der unveränderbaren Steifigkeit der Feder bei der Änderung der Fahrzeugkarosseriehöhe. Dabei befindet sich die Gewinde-Kraftvorrichtung in einem Bereich, der Schlagbelastungen vom Rad aufnimmt. Außerdem ist es schwer, die Schraubenpaararbeitsoberflächen vor Schmutz zu schützen.

Bekannt ist auch eine Federung für Kraftfahrzeuge mit veränderbarer Bodenfreiheit (siehe Patentanmeldung DE 10 2015 214161 A1, IPC B60G 15/06, B60G 15/06, B60G 17/02, B60G 17/02, veröffentlicht 02.02.2017). Diese Federung enthält eine Zylinderfeder. Ein unterer Federteller der Zylinderfeder stützt sich auf eine Mutter einer Schraubenwinde mit einem Antrieb. Der Antrieb ist seitlich unter der Feder im unteren Teil des Federbeins angebracht.

In dieser bekannten Federung ist die Möglichkeit, die Steifigkeit der Feder bei der Regulierung der Fahrzeugkarosseriehöhe zu ändern, nicht realisiert. Die Schraubenwinde mit dem Antrieb befindet sich in einem Bereich, der das stärkste Rütteln und erhebliche Schlagbelastungen aufnimmt.

Bekannt ist weiterhin eine Federung für Kraftfahrzeuge mit einstellbarer Bodenfreiheit (siehe Patentanmeldung PCT WO 2010/049026 A1, IPC B60G 15/06, B60G 17/015, B60G 17/02, F16F 09/38, veröffentlicht 06.05.2010). Diese Federung umfasst eine Hauptfeder und eine Hilfsfeder. Die Hauptfeder stützt sich unten auf eine Schraubenwindenmutter. Die Hilfsfeder ist oben zwischen der Schraubenwindenmutter und der Karosserie angeordnet. Die Schraubenwinde ist mit einem Elektroantrieb ausgestattet.

Diese Anordnung der Schraubenwindenmutter zwischen der Haupt- und der Hilfsfeder in der bekannten Federung ermöglicht es:
- die Schraubenwinde zu entlasten,
- die Leistung des Antriebs der Schraubenwinde zu verringern und
- ihre Schnellwirkung zu erhöhen.

Jedoch ist in dieser bekannten Federung die Möglichkeit nicht sichergestellt, die Federsteifigkeit bei der Regulierung der Bodenfreiheit zu ändern. Die Einbringung von mehreren Federn in die Konstruktion der Federung führt zu einer wesentlichen Verkomplizierung dieser. Die Schwingung sowie das Rütteln werden vom Rad unmittelbar über die Schraube der Schraubenwinde zum Elektroantrieb übertragen. Dadurch wird die Zuverlässigkeit des Elektroantriebs beeinträchtigt.

Bekannt ist außerdem eine Federung für Kraftfahrzeuge mit veränderbarer Bodenfreiheit (siehe Patentanmeldung JPH08197931 A, IPC B60G 15/06, B60G 17/00, B60G 17/02, veröffentlicht 06.08.1996). Diese Federung umfasst eine Hauptfeder und zwei Hilfsfedern. Eine Schraubenwinde mit einem Elektroantrieb ist über die Hilfsfedern mit der Karosserie gekoppelt.

Diese bekannte Federung ermöglicht es, sowohl die Bodenfreiheit, als auch die Federsteifigkeit einzustellen. Dies wird aber durch eine Verkomplizierung der Federungskonstruktion erreicht. Die Anordnung der Kraftvorrichtung entlang der Beinachse schließt die zentrale Anordnung eines Federdämpfers aus. Die Schwingung sowie das Rütteln werden vom Rad unmittelbar über die Schraube der Schraubenwinde zum Elektroantrieb übertragen. Dadurch wird die Zuverlässigkeit des Elektroantriebs beeinträchtigt.

Bekannt sind ferner Federungen für Kraftfahrzeuge mit veränderbarer Bodenfreiheit. In solchen Federungen wird ein Schraubenpaar von den Windungen der Feder selbst mit dem Gewindeteil der Mutter oder der Schraube in spezieller Ausführung gebildet. Bekannt ist eine Federung für Kraftfahrzeuge mit veränderbarer Bodenfreiheit (siehe Urheberschein SU 1384417 A1, IPC B60G 17/04, veröffentlicht 30.03.1988). Diese Federung umfasst eine Zylinderfeder, eine Schraubenstütze, einen Antrieb der Schraubenstütze und Zeiger der statischen Lage des Fahrzeugteils. Die Schraubenenden der Schraubenstütze sind in die Feder und in einen Teil des Fahrzeuges eingeschraubt. Bei einer statischen Lage des Fahrzeugs treffen sich die Zeiger. Die Steifigkeit der Feder entspricht der darauf wirkenden statischen Last. Beim Drehen der Schraube wird die Zahl der wirksamen Federwindungen verringert bzw. erhöht. Dadurch wird die Steifigkeit der Feder geändert. Die Bodenfreiheit ändert sich in diesem Fall nur gering. Die Änderung der Bodenfreiheit erfolgt lediglich aufgrund der Änderung der Federsteifigkeit. Dies ist dadurch bedingt, dass die Schraube beim Drehen in Bezug sowohl auf die Karosserie als auch auf die Feder vertikal versetzt wird.

Die bekannte Federung weist folgende Mängel auf. Während sich die Steifigkeit der Feder in einem ziemlich breiten Bereich ändern kann, bleibt der Änderungsbereich der Bodenfreiheit relativ gering. Zwei Schraubenverbindungen zeigen eine höhere Widerstandskraft gegen das Schraubendrehen und bedürfen somit eines sehr leistungsstarken Antriebs. Dies beschränkt die Anwendung der bekannten Federung in Fahrzeugen mit Regulierung der Federung im Fahrbetrieb. Beim Drehen der Schraube ist ein Aufdrehen und Verdrehen der Feder möglich. Dadurch wird der Reguliervorgang beeinträchtigt. Besonders kritisch ist es für die Schraube in der oberen Lage.

Bekannt ist auch eine Vorrichtung zur Höhenverstellung einer Radaufhängung eines Fahrzeugs (siehe Patentanmeldung DE 10 2015 224 527 A1). Die darin beschriebene Radaufhängung weist eine zylindrische Hauptfeder zwischen zwei Federtellern und eine unter dem unteren Federteller der Hauptfeder angeordnete zylindrische Verstellfeder mit Lamellenwindungen auf, mit deren Hilfe der untere Federteller entlang einer Längsachse der Radaufhängung verstellbar ist. Zur Verstellung werden die Windungen der Verstellfeder über eine Stützringscheibe eines Stützringtopfes geführt, der um ein mit dem unteren Federteller der Hauptfeder verbundenes Dämpfungsrohr angeordnet ist und Wälzlager aufweist, wobei die Windungen oberhalb der Stützringscheibe gegeneinander komprimiert werden und wobei die ganze Verstellfeder in den komprimierten Abschnitt und einen unkomprimierten Abschnitt unterhalb der Stützringscheibe geteilt wird. Der komprimierte Teil dient dabei als Widerlager für den unteren Federteller der Hauptfeder. Durch Drehen des Stützringtopfes mit der Stützringscheibe ist es damit möglich, die Anzahl der komprimierten Windungen der Verstellfeder unter dem unteren Federteller der Hauptfeder zu vergrößern oder zu verringern und dadurch die Bodenfreiheit des Fahrzeugs einzustellen. Dabei werden mehr oder weniger komprimierte Windungen gebildet, wodurch zum einen die Bodenfreiheit des Fahrzeugs und zum anderen der maximale Federweg einstellbar ist. Jedoch lässt sich darüber nicht die Steifigkeit der Hauptfeder beeinflussen. Diese Radaufhängung weist folgende Mängel auf: die Steifigkeit der Hauptfeder der Radaufhängung ändert sich nicht bei der Regulierung der Bodenfreiheit und die Verstellfeder, die Knicke einer Windung zwischen einem komprimierten und einem nicht komprimierten Abschnitt ermöglichen soll, kann nur aus einem flexiblen Band von einer ziemlich geringen Stärke ausgebildet werden. Dies bedeutet aber, dass einer Umdrehung des Stützringtopfes nur eine kleine Änderung der Höhe entspricht, wodurch wird die Dauer des Federung-Reguliervorgangs verlängert wird. Außerdem werden die dynamischen Charakteristiken des Reguliervorgangs im Fahrbetrieb des Fahrzeugs beeinträchtigt; da die Reguliervorrichtung unter dem unteren Ende der Blattfeder am beweglichen Teil der Radaufhängung angeordnet ist, wodurch sämtliche elektromechanische Baugruppen der Vorrichtung einer negativen Einwirkung der vom Rad des Fahrzeugs übertragenen Schwingungen und Schlagbelastungen ausgesetzt werden.

Bekannt ist weiterhin eine Federung für Kraftfahrzeuge mit veränderbarer Bodenfreiheit (siehe Patent RU 2 458 802 C2, IPC B60G 17/015, B60G 17/02 veröffentlicht 20.08.2012). Diese Federung weist die größte Anzahl von gemeinsamen wesentlichen Merkmalen mit der vorliegenden technischen Lösung auf und wurde deshalb als Prototyp für die Weiterentwicklung gewählt. Diese Prototyp-Federung umfasst eine zylinderförmige Schraubenfeder. Die zylinderförmige Schraubenfeder ist mit einer Reguliervorrichtung versehen. Die Reguliervorrichtung ist an der Karosserie des Fahrzeugs befestigt und steht in Wechselwirkung mit dem Antriebsmotor über eine Getriebestufe. Die Reguliervorrichtung ist in Form eines Kugelgewindetriebs ausgeführt. Der Kugelgewindetrieb umfasst eine Regulierbuchse und eine Kugelmutter. Die Regulierbuchse lässt sich durch den Antriebsmotor in Drehung versetzen. Die Regulierbuchse dient zum Verstellen des Tellers der zylinderförmigen Schraubenfeder. Die Kugelmutter ist radial außerhalb der Regulierbuchse und innerhalb der zylinderförmigen Schraubenfeder angeordnet.

Die bekannte Prototyp-Federung weist folgende Mängel auf:
- Die Steifigkeit der Feder ändert sich bei der Regulierung der Bodenfreiheit nicht, und
- die Reguliervorrichtung sperrt die obere Stirnfläche der Feder ab. Dadurch wird die Montage eines Teleskopdämpfers innerhalb der Feder umständlich gemacht.

Die Aufgabe der vorliegenden Erfindung bestand in der Entwicklung einer Federung für Fahrzeuge mit regelbarer Bodenfreiheit und Steifigkeit. Eine solche Federung soll eine erhöhte Steifigkeit der Federung bei der Verringerung der Bodenfreiheit gewähren. Darüber hinaus soll sie eine verringerte Steifigkeit der Federung bei der Erhöhung der Bodenfreiheit sicherstellen. Dabei ist die Möglichkeit anzustreben, einen Teleskopdämpfer innerhalb der Feder einzubauen, ohne den Zugang zu seinem oberen Befestigungspunkt zu sperren.

Die gestellte Aufgabe wird durch die Merkmale des Anspruchs 1 gelöst. Dabei ist die Reguliervorrichtung als Formmutter ausgeführt, die direkt auf die Windungen der, vorzugsweise zylinderförmigen, Schraubenfeder aufgeschraubt ist und Wälzkörper aufweist, die sich entlang der Schraubenlinie befinden und mit den Windungen der Schraubenfeder verbunden sind, wobei die Reguliervorrichtung vollständig auf und relativ zur Schraubenfeder bewegbar und feststellbar ist. Dabei kann die Reguliervorrichtung vollständig zwischen einem ersten und zweiten Ende der Schraubenfeder bewegbar angeordnet sein.

Die Formmutter kann entweder durch zwei koaxiale Zylinderhülsen ausgebildet sein, die mithilfe von Bolzen entlang der Schraubenlinien verbunden sind, wobei an den Bolzen als Wälzkörper obere Lastrollen und untere Stützrollen drehbar befestigt sind und die oberen Lastrollen und die unteren Stützrollen mit den Federwindungen verbunden sind. Die Formmutter kann auch durch zwei miteinander verbundene, koaxiale Zylinderhülsen ausgebildet sein, die Führungsösen und darin sowie dazwischen angeordnete bewegliche Stangen mit darauf angeordneten Federn aufweisen, wobei die Stangen mit Bolzen über Stützen fest verbunden sind, welche die Federn vorspannen und wobei an den Bolzen als Wälzkörper Lastrollen drehbar befestigt sind und die Lastrollen mit den Federwindungen verbunden sind. In einer solchen Reguliervorrichtung können nicht nur zylinderförmige Schraubenfedern, sondern auch nicht-zylindrische Federn eingesetzt werden. Dazu gehören z. B. Kegel- und Tonnenfedern. Zu diesem Zweck werden koaxiale Zylinderhülsen mit einem vergrößerten Radialspalt angeordnet.

Die Wälzlager können bewegbar entlang ihrer Drehachse, vorzugsweise entlang der Bolzen, angeordnet sein. Dabei stellt diese Beweglichkeit den Betrieb der Reguliervorrichtung mit nicht-zylindrischen Schraubenfedern sicher, z. B. mit Kegel- oder Tonnenfedern. Durch Drehen der Formmutter können die Rollen sich radial verschieben.

Die Getriebestufe des Antriebsmotors kann als Schneckengetriebe ausgeführt sein.

Die Getriebestufe des Antriebsmotors kann als Planetengetriebe ausgeführt sein, das z. B. innerhalb der Schraubenfeder angeordnet ist.

Zwischen der Reguliervorrichtung und einem unter der Schraubenfeder angeordneten Federteller kann ein flexibler Wellschlauch befestigt sein, der die Windungen der Schraubenfeder abdeckt.

An der Unterseite der Reguliervorrichtung kann auch ein flexibler Stutzen befestigt sein, der einen Dämpfer der Federung umschlingt und der gleitende Dichtelemente aufweist, die das Eindringen von Schmutz ins Innere der Formmutter ausschließen.

Die vorliegende Federung für Kraftfahrzeuge mit veränderbarer Bodenfreiheit wird nun anhand der Figuren näher erläutert. Es zeigen:
- Fig. 1: eine erste Ausführungsform der Reguliervorrichtung im Längsschnitt, wobei die Reguliervorrichtung mit den Windungen einer zylinderförmigen Schraubenfeder verbunden ist,
- Fig. 2: die erfindungsgemäße Fahrzeugfederung mit der Reguliervorrichtung der ersten Ausführungsform zusammengebaut mit dem Dämpfer im Teillängsschnitt,
- Fig. 3: einen Teil der Reguliervorrichtung der ersten Ausführungsform in vergrößertem Maßstab im Längsschnitt,
- Fig. 4: eine zweite Ausführungsform der Reguliervorrichtung im Längsschnitt, wobei die Reguliervorrichtung mit den Windungen einer zylinderförmigen Schraubenfeder verbunden ist, und
- Fig. 5: eine Seitenansicht der Reguliervorrichtung der zweiten Ausführungsform, welche die äußere Zylinderhülse mit Ösen und Öffnungen für die beweglichen Stangen zeigt.

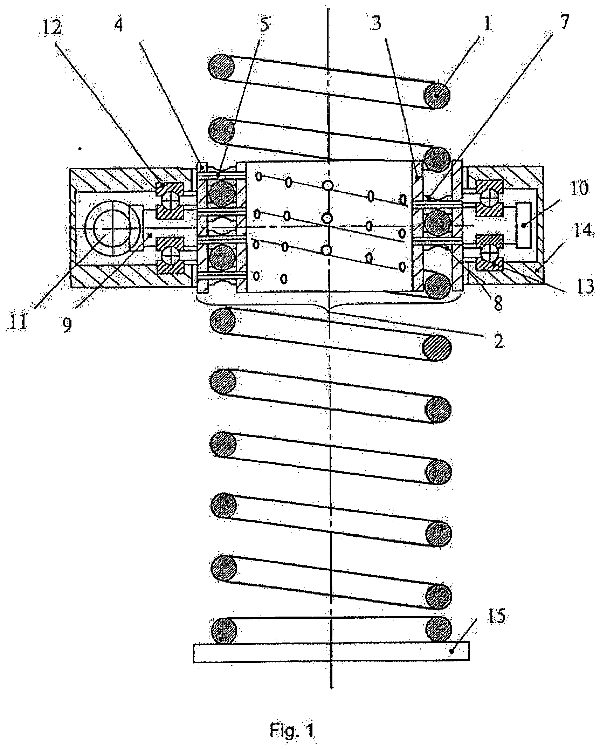

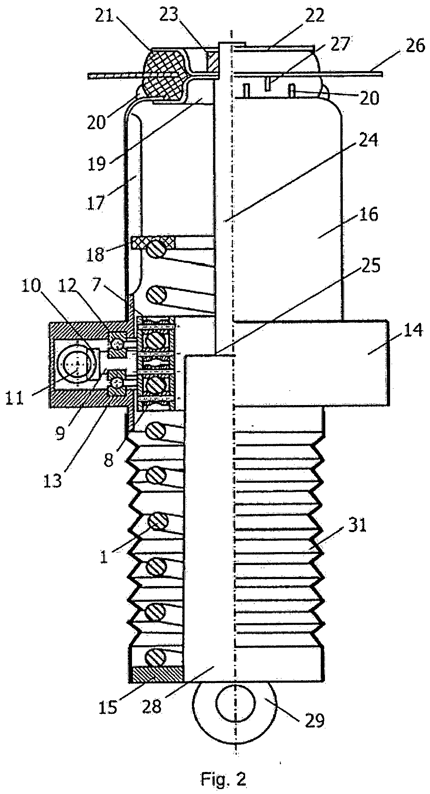

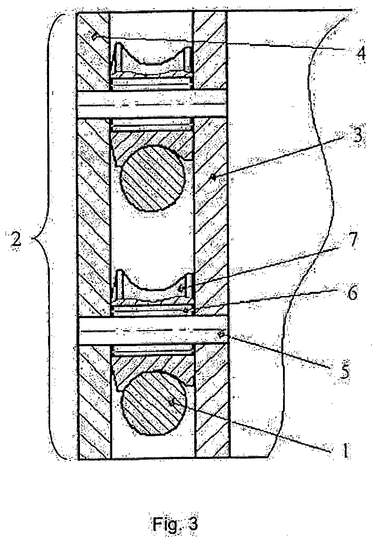

Die vorliegende, in den Figuren 1 bis 3 gezeigte, erste Ausführungsform der Fahrzeugfederung mit veränderbarer Bodenfreiheit umfasst hauptsächlich eine zylinderförmige Schraubenfeder 1. Auf den Windungen der Schraubenfeder 1 ist eine Reguliervorrichtung 2 aufgeschraubt. Die Reguliervorrichtung 2 ist am Fahrzeugkörper (in den Figuren nicht gezeigt) befestigt. Die Reguliervorrichtung 2 ist als Formmutter ausgeführt. Die Formmutter ist aus zwei koaxialen Zylinderhülsen gebildet, einer Innenhülse 3 und einer Außenhülse 4. Die Zylinderhülsen können miteinander entlang der Schraubenlinien mithilfe von Bolzen 5 fest verbunden sein. Die Steigung der Schraubenlinien muss vorzugsweise um 8 - 12% kleiner als die Windungshöhe der Schraubenfeder 1 eingestellt werden. An den Bolzen 5 können obere Lastrollen 7 und untere Stützrollen 8 angeordnet sein. Die Lastrollen 7 und die Stützrollen 8 sind drehbar, z. B. in Nadellagern 6 (siehe Fig. 3), eingebaut und können auch entlang der Bolzen 5 bewegbar sein. Die oberen Lastrollen 7 und die unteren Stützrollen 8 sind mit den Windungen der zylinderförmigen Schraubenfeder 1 verbunden. Die oberen Lastrollen 7 und die unteren Stützrollen 8 sind im Bereich von einer Windung bis eineinhalb Windungen der zylinderförmigen Schraubenfeder 1 angeordnet. Die Rollen können weit auseinander und voneinander getrennt eingebaut sein. Die Lastrollen 7 und die Stützrollen 8 können in der Mitte eine ringförmige Vertiefung aufweisen. Dabei können die Lastrollen 7 einen größeren Durchmesser haben. Am Außenzylinder 4 ist ein Flansch 9 befestigt, vorzugsweise angeschweißt. Der Flansch 9 trägt einen Antriebskranz 10, z. B. einen Antriebskranz eines Schneckenrads oder einer Profil-Eingriffsfläche eines anderen Getriebes. Der Antriebskranz 10 greift in eine Treibwelle 11 des Antriebsmotors ein, z. B. eines Elektromotors (in den Figuren nicht gezeigt). Der Flansch 9 ist zwischen einem oberen Kugeldrucklager 12 und einem unteren Kugelstützlager 13 eingebaut. Das obere Kugeldrucklager 12 und das untere Kugelstützlager 13 sind in einem Gehäuse 14 angeordnet. Unter der Schraubenfeder 1 befindet sich ein Federteller 15. Der Federteller 15 nimmt die Belastung von der Schraubenfeder 1 auf.

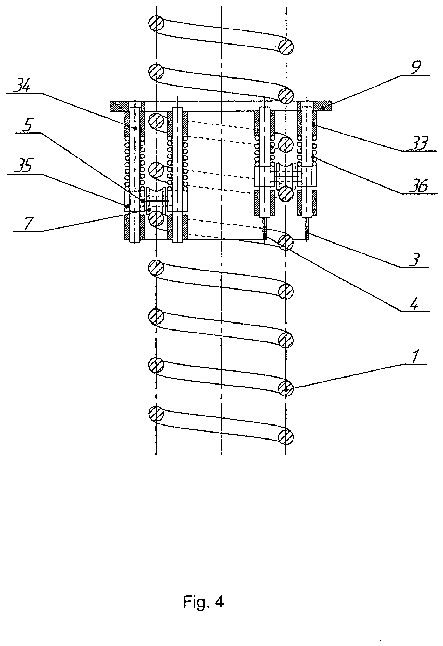

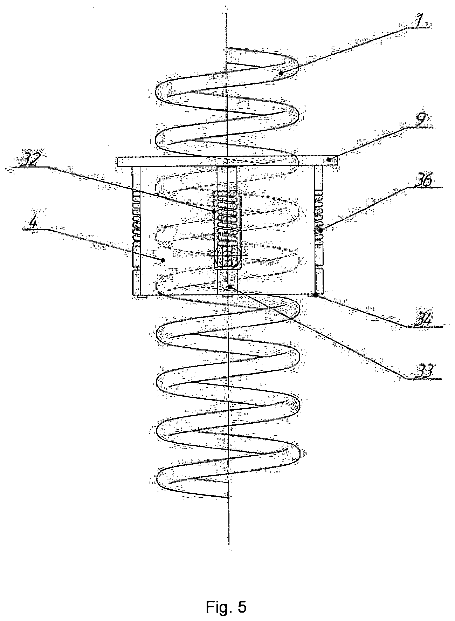

In Fig. 4 und 5 ist eine zweite Ausführungsform der Fahrzeugfederung mit veränderbarer Bodenfreiheit in Bezug auf die Formmutter-Konstruktion gezeigt. Hier sind die oben genannten Stützrollen 8 nicht realisiert und die die Formmutter bildenden koaxialen Zylinderhülsen (eine Innenhülse 3 und eine Außenhülse 4) können untereinander über einen Flansch 9 und zusätzliche Verbindungsglieder (in den Figuren nicht gezeigt) verbunden sein. Die Zylinderhülsen 3 und 4 enthalten Führungsösen 33. In und zwischen diesen Führungsösen 33 sind bewegliche Stangen 34 angeordnet. Die Stangen 34 sind mit Bolzen 5 und den daran drehbar angeordneten Lastrollen 7 über Stützen 35 fest verbunden. Die Stützen 35 spannen die Federn 36 vor. Die Lastrollen 7 können entlang der Bolzen bewegbar sein. In Fig. 5 sind Öffnungen 32 gezeigt, die in den Wandungen der Zylinderhülsen 3, 4 ausgebildet sind. Die Öffnungen 32 ermöglichen es, die Federn 36 und die Stützen 35 anzuordnen. Die Stützen 35 sind dabei montier- und demontierbar und die Konstruktion der Stützen 35 sieht die Möglichkeit vor, die Bolzen 5, die Lastrollen 7 und die Stangen 34 starr zu fixieren.

Die erfindungsgemäße Federung ist als fertige Baugruppe (zusammengebaute Einheit) ausgeführt. Die Reguliervorrichtung 2 ist auf die Windungen der Schraubenfeder 1 aufgeschraubt und kann mit einem Gehäuse 14 abgedeckt sein. Das Gehäuse 14 kann mit einem Mantel 16 fest verbunden sein. Der Mantel 16 kann senkrechte Rippen bzw. Nuten 17 aufweisen. Die senkrechten Rippen bzw. Nuten 17 bilden eine gleitende Verbindung mit entsprechenden Nuten bzw. Rippen einer Scheibe 18. Die Scheibe 18 ist an der oberen Stirnfläche der zylinderförmigen Schraubenfeder 1 befestigt. Der Mantel 16 hat an seinem oberen Ende einen Deckel in Form eines Abstütztellers 19 mit radialen Rippen 20. Die radialen Rippen 20 sind umlaufend ausgeführt und werden in Gegenrasten einer elastischen Einlage 21 eingerastet. Die elastische Einlage 21 ist mit einem Niederhalter 22 zugedeckt. Eine auf einer Stange 24 eines Dämpfers 25 aufgeschraubte Mutter 23 hält die Federung an einer ringförmigen Stützfläche 26 der Fahrzeugkarosserie über den Niederhalter 22 und die elastische Einlage 21. Die ringförmige Stützfläche 26 weist ebenfalls radiale Rippen 27 auf, die auch in die Gegenrasten der elastischen Einlage 21 einrasten. An einem Rohr 28 des Dämpfers 25 ist der Federteller 15 der Schraubenfeder 1 angeordnet. Das Rohr 28 umfasst eine Einheit 29 für die untere Befestigung der Federung. Der Federteller 15 kann einen flexiblen Wellschlauch 31 tragen. Der Wellschlauch 31 deckt die Windungen der Schraubenfeder 1 ab. Das obere Ende des flexiblen Wellschlauchs 31 ist am Gehäuse 14 befestigt. An der Unterseite der Reguliervorrichtung 2 kann auch ein flexibler Stutzen befestigt sein, der den Dämpfer 25 der Federung umschlingt und der gleitende Dichtelemente aufweist, die das Eindringen von Schmutz ins Innere der Formmutter ausschließen.

Die vorliegende Federung für Kraftfahrzeuge mit veränderbarer Bodenfreiheit, entsprechend den in den Figuren 1 bis 5 gezeigten Ausführungsformen, funktioniert wie folgt: Beim Drehen der Reguliervorrichtung 2 ändert sich die Zahl der wirksamen Windungen der Schraubenfeder 1 unter der Reguliervorrichtung. Diese wirksamen Windungen der Schraubenfeder 1 nehmen die Belastung von der Fahrzeugkarosserie auf. Die Zahl der wirksamen Windungen der Schraubenfeder 1 ändert sich dabei folgenderweise: Bei der Reduzierung der Windungszahl unter der Reguliervorrichtung 2 verringert sich die Bodenfreiheit mit gleichzeitiger Erhöhung der Federungssteifigkeit. Im Gegenfall wird die Bodenfreiheit erhöht und die Steifigkeit der Federung reduziert. Bei der Verringerung der Bodenfreiheit ragen die freien Federwindungen aus der Mutter nach oben in den Mantel 16 heraus. Beim Drehen der unter Belastung stehenden Formmutter über die Windungen der Schraubenfeder 1 würde sich die Schraubenfeder 1 normalerweise etwas verdrehen. Diese unerwünschte Verdrehung wird jedoch verhindert, indem das obere freie Ende der Schraubenfeder 1 mithilfe der Scheibe 18 gesichert wird, die in den Rippen bzw. Nuten 17 des Mantels 16 gleitet.

Die vorliegende Federung für Kraftfahrzeuge mit veränderbarer Bodenfreiheit, entsprechend der Ausführungsform der Figuren 4 und 5, funktioniert wie folgt: Bei der Federung im Betrieb ändert sich der aktuelle Neigungswinkel der Federwindungen ständig und die Verteilung der Beanspruchung der Lastrollen 7 und der Stützrollen 8 wird ungleichmäßig. Die genannte Ungleichmäßigkeit bei der Verteilung der Beanspruchung der Lastrollen 7 wird dadurch beseitigt, dass die Bolzen 5 der Lastrollen 7 auf den Federn 36 beweglich in Bezug auf die koaxialen Zylinderhülsen 3, 4 angeordnet sind, die die Formmutter bilden, und die Stützrollen 8 nicht realisiert sind. Die Parameter der Federn 36 werden entsprechend den Parametern der Schraubenfeder 1 so ausgewählt, dass die gesamte auf die Schraubenfeder 1 wirkende Kraft über die Achsen der sämtlichen Lastrollen 7 gleichmäßig verteilt wird. Die Achse der obersten Lastrolle 7 in der Formmutter kann dabei unbeweglich eingebaut sein. Bei der Federung im Betrieb und der Änderung des Neigungswinkels der Windungen der Schraubenfeder 1 werden die Lastrollen 7 in Bezug auf die Formmutter unterschiedlich verstellt, und zwar: bei der Verringerung der Beanspruchung der Schraubenfeder 1 wird der Abstand zwischen den oberen und den unteren Lastrollen 7 vergrößert, steigt die Beanspruchung an, verringert sich der Abstand. Das heißt, dass bei der Federung im Betrieb die Amplitude der Schwingungen der Lastrollen 7 unterschiedlich sein wird: von Maximal bei der untersten Lastrolle 7 bis zu einer Null-Amplitude bei der obersten Lastrolle 7, wenn ihre Achse in den koaxialen Zylinderhülsen der Formmutter unbeweglich befestigt ist.

Zwecks Prüfung der erfindungsgemäßen Federung wurden ein Modell der Federung und ein vereinfachter Belastungsprüfstand gefertigt. Dieser Prüfstand ermöglicht es, die Kraft zu messen, die für das Drehen der Reguliervorrichtung erforderlich ist. Es wurde eine Serienfeder erworben, die normalerweise in einem Pkw eingesetzt wird. Der angebogene Teil der oberen Windung dieser Serienfeder wurde abgeschnitten. Dadurch wurde das erleichterte Aufschrauben der Reguliervorrichtung sichergestellt. Nach dieser Vorbereitungsmaßnahme hatte die Feder folgende Parameter:

| | |
|---|---|
| Gesamtzahl der Windungen | 8; |
| Zahl der wirksamen Windungen | 7; |
| Durchmesser der Stange (des Stabs) | 12 mm; |
| Außendurchmesser | 127 mm; |
| Windungshöhe der Feder | 51 mm. |

Es wurde eine Formfedermutter gefertigt. Diese Federmutter bestand aus zwei runden Zylinderhülsen jeweils 100 mm hoch. Die Zylinderhülsen wurden mit einem Spalt von 17,5 mm über Anschweißbolzen mit einem Durchmesser von 6 mm konzentrisch miteinander verbunden. An den Bolzen wurden Zylinderrollen mit einem Durchmesser von 18 mm und mit einer Länge von 17 mm angeordnet. Die Zylinderrollen wurden aus Stahl hergestellt. Die Zahl der Zylinderrollen war wie folgt: Lastrollen: 20 Stück, Stützrollen: 12 Stück. Die Oberflächen der verbundenen Teile wurden zwecks Härtung nicht zusätzlich verstärkt. Die Oberflächen hatten die Rauheit von ca. 20 µm und wurden mit LITOL eingefettet. Die Rollen hatten eine symmetrische dreieckförmige Aussparung mit einem Winkel von 90°, die Stirnseiten wurden abgerundet. An die Außenhülse wurde ein Hebel angeschweißt, um die Drehkraft der Formmutter unter Beanspruchung zu messen.

Schritt 1 der Prüfungen: Die Formmutter wurde an der obersten Windung der Feder angeordnet. Die Federhöhe unter der Formmutter ohne Beanspruchung betrug ca. 350 mm, die anfängliche Beanspruchung 110 kp. Die Federhöhe unter der Formmutter betrug ca. 300 mm. Die Mutter wurde nach unten gedreht: Das gemessene Losbrechmoment der Formmutter betrug 0,2...0,3 kpm. Beim fortgesetzten Drehen sank das Soll-Drehmoment beachtlich und betrug weniger als 0,1 kpm. Die Formmutter wurde nach oben gedreht. Wegen der Verdrehung der Feder drehte sich die Formmutter stoßweise nach oben. Das Losbrechmoment betrug ca. 1,5 kpm, beim fortgesetzten Drehen der Formmutter ca. 1 kpm.

Die sekundäre Beanspruchung betrug 330 kp, was ungefähr der normalen Beanspruchung der vorliegenden Feder in einem Fahrzeug entspricht. Die Federhöhe unter der Formmutter betrug ca. 200 mm. Die Mutter wurde nach unten gedreht. Das Losbrechmoment der Formmutter betrug dabei 0,4...0,5 kpm. Beim fortgesetzten Drehen sank das Drehmoment bis ca. 0,2 kpm. Die Formmutter wurde nach oben gedreht. Um die Verdrehung der Feder auszuschließen, musste die obere Federwindung festgehalten werden. Das Losbrechmoment betrug 5 kpm und mehr. Beim fortgesetzten Drehen der Formmutter betrug das Losbrechmoment ca. 3 kpm.

Schritt 2 der Prüfungen: Die Formmutter wurde in der Mitte der Feder angeordnet. Die Federhöhe unter der Formmutter ohne Beanspruchung betrug ca. 200 mm, die Beanspruchung 300 kp, die Federhöhe unter der Mutter ca. 100 mm. Die Formmutter wurde nach unten gedreht. Das gemessene Losbrechmoment betrug dabei 0,3...0,4 kpm. Beim fortgesetzten Drehen der Formmutter sank das Drehmoment bis 0,2 kpm. Die Formmutter wurde nach oben gedreht. Das Drehen verlief stufenlos, die Feder wurde nicht verdreht. Das Losbrechmonent betrug ca. 4 kpm, beim Drehen ca. 3 kpm.

Oben sind die gemittelten Werte der gemessenen Drehmomente der Formfedermutter angegeben. Diese Werte waren stark auf den gleichmäßigen Gang der Reguliervorrichtung bezogen, und zwar wurde beim gleichmäßigen Gang der Formmutter ein kleineres Drehmoment festgestellt. Stoßartiges Drehen ist auf die relativ grob ausgeführten Rollenoberflächen zurückzuführen.

Es ist interessant, dass das Vorhandensein von Windungen mit einer verringerten Windungshöhe am Federende das Drehen der Federmutter nicht im Geringsten beeinträchtigt hat. Mit anderen Worten, die Rollen schieben die Windungen bei einer geringen Kraftzunahme auseinander. Das bedeutet, dass korrektes Funktionieren der Reguliervorrichtung keines besonders präzisen Federwickelns in Bezug weder auf die Windungshöhe noch auf den Durchmesser bedarf.

Gemäß den Prüfergebnissen des Fahrzeugfederung-Modells unter Beanspruchung zwecks Regulierung der Bodenfreiheit und der Steifigkeit der Feder kann behauptet werden, dass die erforderliche Funktionsfähigkeit dieser Vorrichtung unter Beanspruchung unter der Voraussetzung einer ordentlichen Durcharbeitung der Konstruktion von den Paarungsteilen (den verbundenen Teilen) sichergestellt ist.

## Patentansprüche

1. Federung für Kraftfahrzeuge mit regelbarer Bodenfreiheit und Steifigkeit umfassend eine Schraubenfeder (1) mit einer an der Karosserie des Fahrzeugs befestigten Reguliervorrichtung (2), die drehbar angeordnet ist, vorzugsweise mittels einer durch einen Elektromotor angetriebenen Getriebestufe,
wobei
die Reguliervorrichtung (2) als Formmutter ausgeführt ist, die direkt auf die Windungen der, vorzugsweise zylinderförmigen, Schraubenfeder (1) aufgeschraubt ist und Wälzkörper aufweist, die sich entlang der Schraubenlinie befinden und mit den Windungen der Schraubenfeder verbunden sind und
dass die Reguliervorrichtung (2) vollständig auf und relativ zur Schraubenfeder (1) bewegbar und feststellbar ist.

2. Federung nach Anspruch 1,
**dadurch gekennzeichnet,**
**dass** die Formmutter durch zwei koaxiale Zylinderhülsen (3, 4) ausgebildet ist, die mithilfe von Bolzen (5) entlang der Schraubenlinien verbunden sind, wobei an den Bolzen (5) als Wälzkörper obere Lastrollen (7) und untere Stützrollen (8) drehbar befestigt sind und die oberen Lastrollen (7) und die unteren Stützrollen (8) mit den Federwindungen verbunden sind oder
**dass** die Formmutter durch zwei miteinander verbundene, koaxiale Zylinderhülsen (3, 4) ausgebildet ist, die Führungsösen (33) und darin sowie dazwischen angeordnete bewegliche Stangen (34) mit darauf angeordneten Federn (36) aufweisen, wobei die Stangen (34) mit Bolzen (5) über Stützen (35) fest verbunden sind, welche die Federn (36) vorspannen und wobei an den Bolzen (5) als Wälzkörper Lastrollen (7) drehbar befestigt sind und die Lastrollen (7) mit den Federwindungen verbunden sind.

3. Federung nach Anspruch 2,
**dadurch gekennzeichnet,**
**dass** die Wälzkörper bewegbar entlang ihrer Drehachse, vorzugsweise entlang der Bolzen (5), angeordnet sind.

4. Federung nach Anspruch 1,
**dadurch gekennzeichnet,**
**dass** die Getriebestufe des Antriebsmotors als Schneckengetriebe ausgeführt ist.

5. Federung nach Anspruch 1,
**dadurch gekennzeichnet,**
**dass** die Getriebestufe des Antriebsmotors als Planetengetriebe ausgeführt ist, das z. B. innerhalb der Schraubenfeder (1) angeordnet ist.

6. Federung nach Anspruch 1,
**dadurch gekennzeichnet,**
**dass** zwischen der Reguliervorrichtung (2) und einem unter der Schraubenfeder (1) angeordneten Federteller (15) ein flexibler Wellschlauch (31) befestigt ist, der die Windungen der Schraubenfeder (1) abdeckt.

7. Federung nach Anspruch 1,
**dadurch gekennzeichnet,**
**dass** an der Unterseite der Reguliervorrichtung (2) ein flexibler Stutzen befestigt ist, der einen Dämpfer (25) der Federung umschlingt und der gleitende Dichtelemente aufweist, die das Eindringen von Schmutz ins Innere der Formmutter ausschließen.

## Claims

1. Suspension for motor vehicles with adjustable ground clearance and stiffness comprising a helical spring (1) with an adjusting device (2) attached to the body of the vehicle, which is rotatably arranged, preferably by means of a gear stage driven by an electric motor, wherein the adjusting device (2) is designed as a shaped nut, which is screwed directly onto the coils of the, preferably cylindrical, helical spring (1) and has rolling elements which are located along the helix and are connected to the coils of the helical spring, and in that the regulating device (2) can be moved and locked completely on and relative to the helical spring (1).

2. Suspension according to claim 1,
**characterized in that**
**in that** the shaped nut is formed by two coaxial cylindrical sleeves (3, 4) which are connected along the helical lines with the aid of bolts (5), upper load rollers (7) and lower support rollers (8) being rotatably fastened to the bolts (5) as rolling elements, and the upper load rollers (7) and the lower support rollers (8) being connected to the spring coils, or
**in that** the shaped nut is formed by two interconnected, coaxial cylindrical sleeves (3, 4) which have guide eyes (33) and movable rods (34) arranged therein and therebetween with springs (36) arranged thereon, the rods (34) being fixedly connected to bolts (5) via supports (35) which prestress the springs (36), and load rollers (7) being rotatably fastened to the bolts (5) as rolling elements, and the load rollers (7) being connected to the spring coils.

3. Suspension according to claim 2,
**characterized in that**
**in that** the rolling elements are arranged movably along their axis of rotation, preferably along the pins (5).

4. Suspension according to claim 1,
**characterized in that**
that the gear stage of the drive motor is designed as a worm gear.

5. Suspension according to claim 1,
**characterized in that**
**in that** the gear stage of the drive motor is designed as a planetary gear, which is arranged, for example, inside the helical spring (1).

6. Suspension according to claim 1,
**characterized in that**
**in that** a flexible corrugated hose (31) is fastened between the regulating device (2) and a spring plate (15) arranged under the helical spring (1) and covers the coils of the helical spring (1).

7. Suspension according to claim 1,
**characterized in that**
that on the underside of the regulating device (2) a flexible connecting piece is fastened which wraps around a damper (25) of the suspension and which has sliding sealing elements which exclude the penetration of dirt into the interior of the shaped nut.

## Revendications

1. Ressort pour les véhicules de particuliers avec un garde-sol réglable et rigidité comportant un ressort hélicoïdale (1) avec un dispositif de régulation (2) fixé à la carrosserie du véhicule disposé à titre rotatif, préférentiellement entraîné par un étage de transmission par un moteur électrique où le dispositif de régulation (2) est exécuté en qualité de modèle de forme vissé directement sur les spires des ressorts hélicoïdales (1) de forme cylindrique préférablement présentant un corps de roulement se situant tout au long des hélices et reliés aux spires et aux spires des ressorts hélicoïdales et que le dispositif de régulation (2) est mobile et identifiable complètement et relativement aux ressorts hélicoïdales (1).

2. Ressort selon la revendication 1 est caractérisé de sorte que le modèle de forme est formé par deux manchons cylindriques coaxiales (3,4) reliés à l'aide de boulons (5) tout au long des hélices où des boulons (5) sont fixés à titre rotatif en qualité de corps de roulement (7) et les rouleaux d'appui inférieures (8) et les galets de charge (7) supérieures et les rouleaux d'appui (8) sont reliés aux spires de ressort ou
que le modèle de forme est formé par le biais de deux manchons cylindriques coaxiles (3,4) reliés entre eux présentant des œillets de guidage (33) et des barres (34) disposés dedans et entre eux mobiles présentant des ressorts montés où les barres (34) sont reliées fixement avec les boulons (5) via les supports (35) poussant les ressorts (36) et où les boulons (5) sont fixés à titre rotatif en qualité de corps de roulement et de galets de charge (7) et que les galets de charge (7) sont reliés aux spires du ressort.

3. Ressort selon la revendication 2 est caractérisé de sorte que les spires de ressort sont disposées à titre mobile tout au long de leur axe rotatif préférablement tout au long des boulons (5).

4. Ressort selon la revendication 1 est caractérisé de sorte que l'étage de transmission du moteur d'entraînement est réalisé en qualité d'engrenage à vis sans fin.

5. Ressort selon la revendication 1 est caractérisé de sorte que l'étage de transmission du moteur d'entraînement est réalisé en qualité de train planétaire qui est disposé à titre d'exemple à l'intérieure des ressorts hélicoïdales.

6. Ressort selon la revendication 1 est caractérisé de sorte qu'un tuyau flexible ondulé (31) est fixé entre le dispositif de régulation (2) et une coupelle de ressort disposée sous le ressort hélicoïdale (1) couvrant les spires des ressorts hélicoïdales (1).

7. Ressort selon la revendication 1 est caractérisé de sorte qu'une tubulure flexible est fixée au niveau inférieur du dispositif de régulation (2) entourant un amortissement (25) du ressort présentant des éléments d'étanchéité mobiles excluant la pénétration de la saleté vers l'intérieur du modèle de forme.
